(19) Europäisches Patentamt
European Patent Office
Office européen des brevets

(11) EP 3 048 000 A2

(12) EUROPEAN PATENT APPLICATION

(43) Date of publication:
27.07.2016 Bulletin 2016/30

(51) Int Cl.:
B60L 3/10 (2006.01)    B60L 15/20 (2006.01)

(21) Application number: 16152053.1

(22) Date of filing: 20.01.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 22.01.2015 KR 20150010414

(71) Applicant: LG Electronics Inc.
Yeongdeungpo-gu
Seoul 150-721 (KR)

(72) Inventor: PARK, Sungchul
07336 Seoul (KR)

(74) Representative: Greenaway, Martin William
Kilburn & Strode LLP
20 Red Lion Street
London WC1R 4PJ (GB)

(54) ELECTRIC VEHICLE CONTROL

(57) An electric vehicle(100), comprising: a motor(132); and a control unit(180) configured to: determine whether the electric vehicle is travelling on an incline; initiate, based on a determination that the electric vehicle is travelling on an incline, an incline assist operation of the electric vehicle; generate a reference torque for the incline assist operation of the electric vehicle; output, to the motor and based on initiating the incline assist operations, the generated reference torque; control the motor to output a driving force according to the reference torque; and determine, based on controlling the motor to output the driving force according to the reference torque, whether the electric vehicle skids on the incline

FIG. 4

**Description**

**CROSS-REFERENCE TO RELATED APPLICATIONS**

Pursuant to 35 U.S.C. § 119(a), this application claims the benefit of an earlier filing date and right of priority to Korean Patent Application Number 10-2015-0010414, filed on January 22, 2015, the entire contents of which are incorporated by reference in their entirety.

**TECHNICAL FIELD**

The present application relates to automated control of an electric vehicle.

**BACKGROUND**

Research on electric vehicles has been actively conducted to address vehicle pollution and energy problems.
An electric vehicle (EV) is a vehicle that mainly obtains power by driving an alternating current (AC) or direct current (DC) motor by using power from a battery. EV's are generally divided into battery dedicated electric vehicles and hybrid electric vehicles. A battery dedicated electric vehicle drives a motor by using power from a battery, and when the battery power is completely consumed, the battery is recharged. A hybrid electric vehicle generates electricity by operating an engine to charge a battery, and drives an electric motor by using the electricity to move.
Hybrid electric vehicles may be classified into those that use a serial mode and those that use a parallel mode. A hybrid electric vehicle in the serial mode is a vehicle in which mechanical energy output from an engine is changed to electric energy through a generator, and the electric energy is supplied to a battery or a motor so that the hybrid electric vehicle is always driven by the motor. In the serial mode, an engine and a generator are added to an existing electric vehicle, for example to increase a travel distance. A hybrid electric vehicle in the parallel mode is a vehicle in which battery power may be used for operating the vehicle, and only an engine (gasoline or diesel) may drive the electric vehicle, so that two kinds of power sources are used for driving the electric vehicle. In the parallel mode, the engine and a motor may simultaneously drive the electric vehicle according to a travel condition.
Recently, motor/control technology has been developed with the aim of creating a high output, small, and efficient system. A DC motor is converted into an AC motor so that an output and power performance, such as acceleration and maximum speed, of the EV are considerably improved. Thus EV's have been developed to approach a comparable level of performance as gasoline vehicles. As high output is promoted and the rotational speed is increased, the motor of the EV becomes light and small, so that weight on board or volume is considerably decreased.

**SUMMARY**

As such, techniques disclosed herein may enable an electric vehicle to reduce slippage in a direction opposite to a desired direction of movement, for example due to skid force by gravity on a hill.
In one aspect, an electric vehicle(100) may include a motor(132); and a control unit(180) configured to: determine whether the electric vehicle is travelling on an incline; initiate, based on a determination that the electric vehicle is travelling on an incline, an incline assist operation of the electric vehicle; generate a reference torque for the incline assist operation of the electric vehicle; output, to the motor and based on initiating the incline assist perations, the generated reference torque; control the motor to output a driving force according to the reference torque; and determine, based on controlling the motor to output the driving force according to the reference torque, whether the electric vehicle skids on the incline.
All the below described embodiment may combined cumulatively or alternatively to be an object of the present invention.
In a possible embodiment, the control unit(180) is further configured to: determine that the electric vehicle skids on the incline; and increase, based on a determination that the electric vehicle skids on the incline, a value of the reference torque so that the driving force output by the motor is increased.
In a possible embodiment, the control unit(180) is further configured to: determine that the electric vehicle drives or reverses on the incline according to the driving force output by the motor; and decrease, based on a determination that the electric vehicle drives or reverses according to the driving force output by the motor, a value of the reference torque so that the driving force output by the motor is decreased.
The electric vehicle may further comprise a speed sensor(174) configured to detect a speed of the electric vehicle. The control unit(180) is further configured to: determine an amount of variation of the speed of the electric vehicle based on the speed of the electric vehicle detected by the speed sensor; and determine an increased torque amount according to the determined amount of variation of the speed of the electric vehicle, wherein the control unit is configured to increase the value of the reference torque based on the determined increased torque amount.

In a possible embodiment, the control unit(180) is further configured to: determine an amount of variation of the speed of the vehicle based on the speed of the electric vehicle detected by the speed sensor; and determine a decreased torque amount according to the determined amount of variation of the speed of the electric vehicle, wherein the control unit is configured to decrease the value of the reference torque based on the determined decrease torque amount.

The electric vehicle may further comprise acceleration input means configured to receive an acceleration input. The control unit is further configured to: determine an acceleration torque according to the received acceleration input; compare the determined acceleration torque with the reference torque; determine that the acceleration torque is equal to or larger than the reference torque; and release the incline assist operation based on a determination that the acceleration torque is equal to or larger than the reference torque.

In a possible embodiment, the control unit(180) is further configured to: determine a torque command value; determine a first output torque value; compare the torque command value with the first output torque value; determine a first comparison value based on comparing the torque command value with the first output torque value; and determine whether the electric vehicle is travelling on an incline based on the first comparison value.

In a possible embodiment, the control unit(180) is further configured to: determine a second output torque value; compare the reference torque with the second output torque value; determine a second comparison value based on comparing the reference torque with the second output torque value; and determine whether the electric vehicle skids on the incline based on the second comparison value.

The electric vehicle may further comprise a wheel sensor(172) configured to detect wheel information; and a hall sensor(171) configured to detect revolutions per minute (RPM) information of the motor. The control unit(180) is configured to determine the first output torque value based on the wheel information or the RPM information.

In a possible embodiment, the control unit(180) is configured to determine the second output torque value based on the wheel information or the RPM information.

The electric vehicle may further comprise an inclination sensor(178) configured to detect an inclination angle of the electric vehicle. The control unit(180) is configured to determine whether the electric vehicle is travelling on an incline based on a signal output by the inclination sensor.

The electric vehicle may further comprise a weight sensor(179) configured to detect a total weight comprising a vehicle weight, a passenger weight, and a cargo weight. The control unit(180) is further configured to adjust the reference torque based on the detected total weight.

In a possible embodiment, the control unit(180) is further configured to: determine an inclination angle of the electric vehicle; and adjust the reference torque based on the inclination angle.

In a possible embodiment, the control unit(180) is further configured to: determine a torque command value; determine a first output torque value; compare the torque command value with the first output torque value; determine a first comparison value based on comparing the torque command value with the first output torque value; and determine the inclination angle of the electric vehicle based on the first comparison value.

The electric vehicle may further comprise shift input means; and a shift input mode detecting unit configured to detect a mode of the shift input means. The control unit(180) is configured to determine whether the electric vehicle is travelling on an incline based on detecting that the mode of the shift input means is a drive shift mode or a reverse shift mode.

The invention may also relate to A method of controlling an electric vehicle, the method comprising: determining whether the electric vehicle is travelling on an incline; initiating, based on a determination that the electric vehicle is travelling on an incline, an incline assist operation of the electric vehicle; generating a reference torque for the incline assist operation of the electric vehicle; outputting, to a motor and based on initiating the incline assist operation, the generated reference torque; control the motor to output a driving force according to the reference torque; and determining, based on controlling the motor to output the driving force according to the reference torque, whether the electric vehicle skids on the incline.

The method may further comprise determining that the electric vehicle skids on the incline; and increasing, based on a determination that the electric vehicle skids on the incline, a value of the reference torque so that the driving force output by the motor is increased.

The method may further comprise determining that the electric vehicle drives or reverses on the incline according to the driving force output by the motor; and decreasing, based on a determination that the electric vehicle drives or reverses on the incline according to the driving force output by the motor, a value of the reference torque so that the driving force output by the motor is decreased.

The method may further comprise determining an amount of variation of a speed of the electric vehicle; and determining an increased torque amount according to the determined amount of variation of the speed of the electric vehicle, wherein increasing, based on a determination that the electric vehicle skids on the incline, a value of the reference torque is based on the determined increased torque amount.

The method may further comprise determining an amount of variation of a speed of the electric vehicle; and determining a decreased torque amount according to the determined amount of variation of the speed of the electric vehicle, wherein decreasing, based on a determination that the electric vehicle drives or reverses on the incline according to the driving force output by the motor, a value of the reference torque is based on the determined decreased torque amount.

The method may further comprise receiving an acceleration input; determining an acceleration torque according to the received acceleration input; comparing the determined acceleration torque with the reference torque; determining that the acceleration torque is equal to or larger than the reference torque; and releasing the incline assist operation based on a determination that the acceleration torque is equal to or larger than the reference torque.

In a possible embodiment, determining whether the electric vehicle is travelling on an incline comprises: determining a torque command value; determining a first output torque value; comparing the torque command value with the first output torque value; determining a first comparison value based on comparing the torque command value with the first output torque value; and determining whether the electric vehicle is travelling on an incline based on the first comparison value.

In a possible embodiment, determining whether the electric vehicle skids on the incline comprises: determining a second output torque value; comparing the reference torque with the second output torque value; determining a second comparison value based on comparing the reference torque with the second output torque value; and determining whether the electric vehicle skids on the incline based on the second comparison value.

In a possible embodiment, the first output torque value is determined based on wheel information detected by a wheel sensor or based on revolutions per minute (RPM) information of the motor detected by a hall sensor.

In a possible embodiment, the second output torque value is determined based on wheel information detected by a wheel sensor or based on revolutions per minute (RPM) information of the motor detected by a hall sensor.

The method may further comprise detecting, by an inclination sensor, an inclination angle of the electric vehicle, wherein determining whether the electric vehicle is travelling on an incline comprises determining whether the electric vehicle is travelling on an incline based on a signal output by the inclination sensor.

The method may further comprise detecting a total weight comprising a vehicle weight, a passenger weight, and a cargo weight; and adjusting the reference torque based on the detected total weight.

The method may further comprise determining an inclination angle of the electric vehicle; and adjusting the reference torque based on the inclination angle.

The method may further comprise determining a torque command value; determining a first output torque value; comparing the torque command value with the first output torque value; and determining a first comparison value based on comparing the torque command value with a first output torque value, wherein determining the inclination angle of the electric vehicle comprises determining the inclination angle based on the first comparison value.

The method may further comprise detecting a shift mode of the electric vehicle, wherein determining whether the electric vehicle is travelling on an incline comprises determining whether the electric vehicle is travelling on an incline based on detecting that the shift mode of the electric vehicle is a drive shift mode or a reverse shift mode.

All or part of the features described throughout this application can be implemented as a computer program product including instructions that are stored on one or more non-transitory machine-readable storage media, and that are executable on one or more processing devices. All or part of the features described throughout this application can be implemented as an apparatus, method, or electronic system that can include one or more processing devices and memory to store executable instructions to implement the stated functions.

The details of one or more implementations are set forth in the accompanying drawings and the description below. Other features will be apparent from the description and drawings, and from the claims. The description and specific examples below are given by way of illustration only, and various changes and modifications will be apparent.

## BRIEF DESCRIPTION OF THE DRAWINGS

FIG. 1 is a diagram illustrating an example of an electric vehicle;
FIG. 2 is a block diagram illustrating an example of an electric vehicle;
FIG. 3 is a block diagram illustrating an example of a control unit of an electric vehicle;
FIG. 4 is a flowchart of an example of controlling an electric vehicle;
FIG. 5 is a diagram illustrating an example of an electric vehicle located on an incline; and
FIGS. 6A to 6D are diagrams illustrating examples of information displayed on a display unit of an electric vehicle.

## DETAILED DESCRIPTION

Techniques are disclosed that enable control of an electric vehicle to reduce slippage in a direction opposite to a desired direction of movement, for example due to skid force by gravity when the electric vehicle is travelling on an incline.

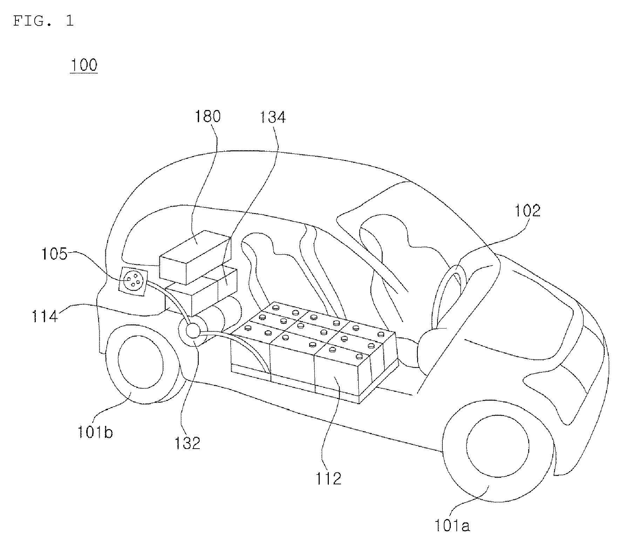

FIG. 1 is a diagram illustrating an example of an electric vehicle.

Referring to FIG. 1, an electric vehicle 100 may include a plurality of wheels 101a, 101b, ..., a steering input unit 102, a charging port 105, a battery 112, a battery management system (BMS) 114, a motor 132, a motor control unit 134, and a control unit 180.

The plurality of wheels 101a, 101b, ..., receives driving force from the motor 132 to be rotated. The electric vehicle 100 moves by the rotation of the plurality of wheels 101a, 101b, ....

The steering input unit 102 adjusts a movement direction of the electric vehicle 100. In FIG. 1, the steering input unit 102 is illustrated as a steering wheel, but is not limited thereto. According to some implementations, the steering input unit 102 may also be formed of a touch screen, a touch pad, or a button, or any other suitable form of input unit.

The charging port 105 may be formed outside the electric vehicle 100 so as to receive electric energy from outside of the EV. The electric vehicle 100 may receive electric energy from the outside through the charging port 105 and charge the battery 112. In some implementations, the number of charging ports 115 may be two or more. For example, the charging port 105 may include a first charging port 105a and a second charging port 105b. The first charging port 105a may be configured to be connected to a home power supply. The second charging port 105b may be configured to be connected to a charging station power supply.

In some implementations, the electric vehicle 100 may include a wireless charging unit (not illustrated). The wireless charging unit (not illustrated) may include a coil part. The electric vehicle 100 may wirelessly receive electric energy through magnetic force between coils the wireless charging unit (not illustrated).

The battery 112 corresponds to an energy source of the electric vehicle 100. The battery 112 may include one or more battery cells. The battery cell may be formed of a rechargeable secondary battery. For example, the battery cell may be formed of a lithium ion cell, a nickel hydrogen cell, a hydrogen fuel cell, a metal air battery, and/or a lead-acid storage battery. The battery 112 may accumulate electric energy received through the charging port 105 or the wireless charging unit (not illustrated). The battery 112 may supply the accumulated electric energy to the electric vehicle 100 as a driving power source.

The BMS 114 may manage a state of charge (SOC), a state of health (SOH), and/or a state of power (SOP) of the battery 112. The BMS 114 may perform battery cell balancing. The BMS 114 may include a protection circuit for preventing damage by over current.

The motor 132 may provide driving force to the electric vehicle 100. The motor 132 may provide driving force to the wheels 101a, 101b, ... , so that the electric vehicle 100 moves. For example, the motor 132 may be formed of at least one of an induction motor, a permanent magnet synchronous motor (PMSM), and a reluctance motor.

In some implementations, a driving force transmitting unit (not illustrated) may be included between the motor 132 and the plurality of wheels 101a, 101b, .... The driving force transmitting unit (not illustrated) transmits driving force provided by the motor 132 to the plurality of wheels 101a, 101b, ....

The motor control unit 134 may control driving of the motor. The motor control unit 134 may include an inverter. For example, the motor control unit 134 may control an output of the motor 132 through pulse width modulation (PWM) control.

In some implementations, when a brake is driven, the motor 132 may be operated as a generator. In this case, kinetic energy while the vehicle travels may be converted into electric energy and collected. The collected electric energy may be accumulated in the battery 112. In this case, the inverter included in the motor control unit 134 may be operated as a PWM rectifier to convert alternating electromotive force generated by the motor into direct electromotive force and transmit the direct electromotive force to the battery 112.

The control unit 180 may control a general operation of each unit. The control unit 180 may be called a vehicle control unit (VCU). The control unit 180, which is a topmost layer control unit, may generally control an entire system of the electric vehicle 100.

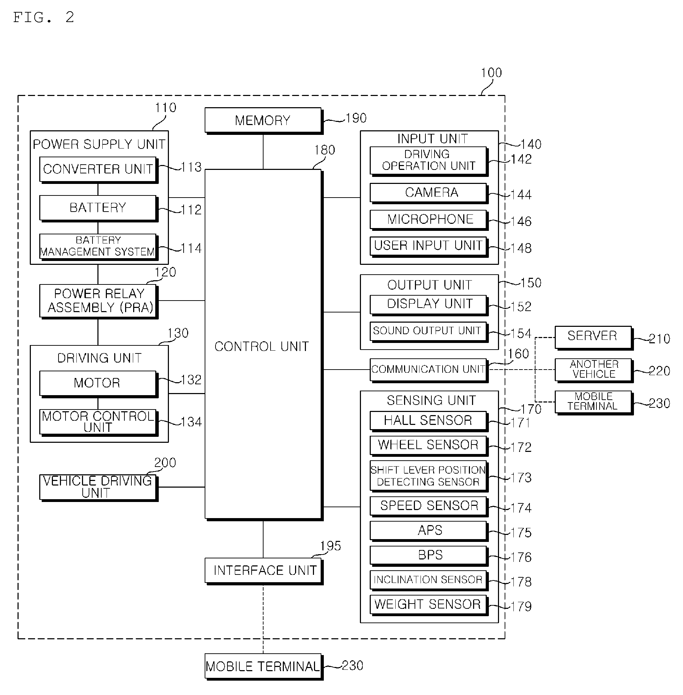

FIG. 2 is a block diagram illustrating an example of an electric vehicle.

Referring to the example of FIG. 2, the electric vehicle 100 may include a power supply unit 110, a power relay assembly (PRA) 120, a driving unit 130, an input unit 140, an output unit 150, a communication unit 160, a sensing unit 170, the control unit 180, a memory 190, an interface unit 195, and a vehicle driving unit 200.

The power supply unit 110 supplies electric energy. The power supply unit 110 may, in some implementations, include the battery 112, the converter unit 113, and the BMS 114.

The battery 112 may include one or more battery cells. The battery 112 may store high voltage electric energy. The battery 112 may supply stored electric energy as a driving power source. For example, the battery cell may be formed of at least one of a lithium ion cell, a nickel hydrogen cell, a hydrogen fuel cell, a metal air battery, and a lead-acid storage battery. When the battery 112 includes the plurality of battery cells, the respective battery cells may be connected in series or in parallel.

In some implementations, a plurality of batteries 112 including the plurality of battery cells may be included.

The converter unit 113 steps down or steps up a voltage of the battery 112. The converter unit 113 may include a DC-DC converter. The converter unit 113 may use a non-insulated direct-current chopper method or a method of insulating a high-voltage side and a low-voltage side through a transformer. The converter unit 113 may supply power, which is stepped down to low voltage, to a unit requiring low voltage. For example, power stepped down to 12 V or 14 V by the converter unit 113 may be supplied to a blower, an audio video navigation (AVN) apparatus, a wiper, a power window, a power sheet, and the like. For example, power stepped down to 42 V by the converter unit 113 may be supplied to a defogger, an electric heater, a power steering, and the like.

The BMS 114 may manage or control the battery 112. The BMS 114 may manage an SOC, an SOH, and/or an SOP of the battery 112.

The BMS 114 may, in some implementations, manage a current of the battery 112 based on data measured by a current measuring sensor. The BMS 114 may manage a voltage of the battery 112 based on data measured by a voltage measuring sensor. The BMS 114 may manage a temperature of the battery 112 based on data measured by a temperature measuring sensor.

The BMS 114 may control charging or discharging. The BMS 114 may determine a failure of the battery 112 based on data received from at least one of the current measuring sensor, the voltage measuring sensor, and the temperature measuring sensor, and perform management or control according to the determination. When the battery 112 is formed of a plurality of battery cells, the BMS 114 may perform cell balancing between the plurality of battery cells.

In some implementations, the power supply unit 110 may further include a cooling device and/or a dehumidifying device. As necessary, the BMS 114 may control power to be smoothly supplied to each unit by driving the cooling device or the dehumidifying device.

The PRA 120 may be a power blocking device for connecting or blocking power supplied from the battery 112 to the driving unit 130. The PRA 120 may serve as a main gate for supplying power to the driving unit 130.

The PRA 120 may include at least one relay, a busbar, and a terminal. The relay may be a high-voltage relay, such as a pre-charging relay (450 V, 10 A or more), and a main relay 450 V (100 to 150 A or more). The busbar and the terminal may be provided so as to connect the battery 112 and the driving unit 130 by wiring.

The PRA 120 may serve as a safety device for completely blocking power in a situation, such as system error generation or maintenance.

The driving unit 130 may provide driving force for moving the electric vehicle 100. The driving unit 130 may include the motor 132 and the motor control unit 134.

The motor 132 may receive electric energy from the power supply unit 110 and generate driving force. The motor 132 may provide driving force to the wheels 101a, 101b, .... The motor 132 may adjust an output under the control of the motor control unit 134. The motor 132 generates a torque or a reverse torque as an output.

The motor 132 may be a DC motor or an AC motor. Particularly, the motor 132 may be formed of at least one of an induction motor, a permanent magnet synchronous motor (PMSM), or a reluctance motor among the AC motors.

For example, the motor 132 may be formed of a cage three-phase induction motor among the induction motors. Here, the cage three-phase induction motor is a motor including a rotor having a cage structure in which both ends of a plurality of conductors installed in an axial direction inside the rotor are short-circuited.

For example, the motor 132 may be formed of a PMSM. The PMSM includes a rotor, in which a permanent magnet is installed within a rotating magnetic field generated by a stator, and the permanent magnet pulls the rotating magnetic field and the rotor is rotated at the same speed as that of the magnetic field, so that a torque is generated. The PMSM may be divided into a surface permanent magnet synchronous motor (SPMSM) or an interior permanent magnet synchronous motor (IPMSM) according to whether the permanent magnet is installed on a surface of the rotor or inside the rotor.

For example, the motor 132 may be formed of a reluctance motor. The reluctance motor generates a torque by using force by which an electromagnet pulls iron. The reluctance motor may be divided into a synchronous reluctance motor (SynRM) and a switched reluctance motor (SRM). In the SynRM, a flux barrier is formed in an electronic steel plate of a rotor, so that a passage of magnetic flux (magnetic resistance) has directionality. In this case, the magnetic flux is sucked into the electromagnet of a stator in the passage. The stator is identically configured to the PMSM, and counter electromotive force by the permanent magnet is not generated, so that the stator may be rotated at a high speed. The SRM includes protruding poles in a stator and a rotor, and switches a current flowing in a coil of the stator to change the pole serving as an electromagnet. The SRM maintains a rotation of the rotor by repeating the aforementioned process to generate a torque.

In some implementations, the number of motors 132 may be two or more.

The motor control unit 134 controls the motor 132 under the control of the control unit 180. The motor control unit 134 may control an output torque of the motor 132.

The motor control unit 134 may include an inverter circuit including a plurality of transistors. For example, the motor control unit 134 may include an inverter circuit including one or more insulated-gate bipolar transistors (IGBT). In this case, the motor control unit 134 may control the motor 132 through the PWM control.

For example, when the motor 132 is formed of an AC motor, the motor control unit 134 may include a three-phase inverter for converting DC power into three-phase AC power. In this case, the motor control unit 134 may control the AC motor through the PWM control.

The electric vehicle 100 may accelerate or decelerate with the torque output of the motor 132 under the control of the motor control unit 134.

According to some implementations, the driving unit 130 may further include a cooling device. As necessary, the motor control unit 134 may control driving force to be supplied to the electric vehicle 100 by driving the cooling device.

The input unit 140 may include a driving operation unit 142 for operating driving of the electric vehicle, a camera 144 for inputting an image signal, a microphone 146 for inputting an audio signal, and a user input unit 148 (for example, a touch key and a mechanical key) for receiving information from a user.

The driving operation unit 142 receives a user input for driving the electric vehicle 100. The driving operating unit 142 may include a steering input unit 102, a shift input unit 145, an acceleration input unit 143, and a brake input unit.

The steering input unit 102 receives an input of a movement direction of the electric vehicle 100 from the user. The steering input unit 102 may be formed in a wheel form so that steering may be input by a rotation, but is not necessarily limited thereto. According to some implementations, for example, the steering input unit 102 may also be formed of a touch screen, a touch pad, or a button, or any other suitable form of input mechanism.

The shift input unit 145 receives an input of drive (D), neutral (N), and reverse (R) of the electric vehicle 100 from the user. The shift input unit 145 may be formed in a lever form, but is not necessarily limited thereto. According to some implementations, for example, the shift input unit 145 may also be formed of a touch screen, a touch pad, or a button, or any other suitable form of input mechanism.

The acceleration input unit 143 receives an input for accelerating the electric vehicle 100 from the user. The brake input unit receives an input for decelerating the electric vehicle 100 from the user. The acceleration input unit 143 and the brake input unit may be formed in a pedal form. According to some implementations, the acceleration input unit 143 or the brake input unit may also be formed of a touch screen, a touch pad, or a button, or any other suitable form of input mechanism.

The camera 144 may include an image sensor and an image processing module. The camera 144 may process a still image or a video obtained by the image sensor (for example, a complementary metal oxide semiconductor (CMOS) or a charge coupled device (CCD)). The image processing module may process the still image or the video obtained through the image sensor, extract necessary information, and transmit the extracted information to the control unit 180. In some implementations, the electric vehicle 100 may include first and second cameras 144a and 144b. A stereo image may be obtained through the first and second cameras 144a and 144b. The image processing module included in the camera 144 may provide information on a distance to an object detected on the stereo image based on binocular parallax information.

The microphone 146 may process an external sound signal into electric data. The processed data may be variously utilized according to a function currently performed in the electric vehicle 100. The microphone 146 may convert a voice command of the user into electric data. The converted electric data may be transmitted to the control unit 180.

In some implementations, the camera 144 or the microphone 146 may also be a constituent element included in the sensing unit 170, not the constituent element included in the input unit 140.

The user input unit 148 is a unit for receiving information from the user. When information is input through the user input unit 148, the control unit 180 may control an operation of the electric vehicle 100 so as to correspond to the input information. The user input unit 148 may include a touch-type input unit or a mechanical input unit.

The output unit 150 is a unit for outputting information processed by the control unit 180, and may include a display unit 152 and a sound output unit 154.

The display unit 152 may display information processed by the control unit 180. For example, the display unit 152 may display information about the electric vehicle. Here, the information about the electric vehicle may include electric vehicle control information for directly controlling the electric vehicle, or electric vehicle driving assistant information for guiding driving for a driver of the electric vehicle.

The display unit 152 may include at least one of a liquid crystal display (LCD), a thin film transistor liquid crystal display (TFT LCD), an organic light emitting diode (OLED), a flexible display, a 3D display, and an e-ink display.

The display unit 152 may be formed in a mutual layer structure with a touch sensor or be integrally formed with the touch sensor to implement a touch screen. The touch screen may serve as the user input unit 148 providing an input interface between the electric vehicle 100 and the user, and provide an output interface between the electric vehicle 100 and the user. In this case, the display unit 152 may include a touch sensor detecting a touch to the display unit 152 so as to receive a control command by a touch method. When a touch to the display unit 152 is made, the touch sensor may detect the touch, and the control unit 180 may generate a control command corresponding to the touch based on the detected touch. Contents input by the touch method may be characters or numbers, an instruction in various modes, or a designable menu item.

In some scenarios, two or more display units 152 may exist. For example, a first display unit 152a may be formed in a cluster form so that a driver may drive and check information at the same time. A second display unit 152b may be provided in a predetermined region of a center fascia to be operated as an AVN apparatus.

In some implementations, the display unit 152 may be implemented as a head-up display (HUD). When the display unit 152 is implemented as the HUD, the display unit 152 may output information through a transparent display provided in a wind shield. As another example, the display unit 152 may include a projection module and output information through an image projected onto a wind shield.

The sound output unit 154 converts an electric signal from the control unit 180 into an audio signal and outputs the converted audio signal. To this end, the sound output unit 154 may include a speaker and the like. The sound output unit 154 may output a sound corresponding to an operation of the user input unit 148.

In some cases, the output unit 150 may further include a haptic output unit (not illustrated). The haptic output unit (not illustrated) generates a tactile output. For example, the haptic output unit may be operated so as to vibrate a steering wheel, a seat belt, and a seat, and enable a user to recognize an output.

The communication unit 160 may exchange data by a wireless manner with a server 210, another vehicle 220, and a mobile terminal 230. The communication unit 160 may include one or more communication modules capable of enabling the electric vehicle to wirelessly communicate with the server 210, another vehicle 220, and the mobile terminal 230.

The communication unit 160 may receive various information, such as traffic information, road information, construction information, traffic accident information, and weather information, from the server 210, another vehicle 220, and the mobile terminal 230.

When a user gets in the electric vehicle 100, the mobile terminal 230 and the electric vehicle 100 of the user may be paired with each other automatically or through execution of an application by a user.

In some implementations, the communication unit 160 may be connected to one or more networks. In this case, the communication unit 160 may include a communication module for the network connection.

The sensing unit 170 senses a signal related to travelling of the electric vehicle 100 and the like. To this end, the sensing unit 170 may include a hall sensor 171, a wheel sensor 172, a shift lever position detecting sensor 173, a speed sensor 174, an accelerator position sensor (APS) 175, a brake position sensor (BPS) 176, an inclination sensor 178, a weight sensor 179, a heading sensor, a yaw sensor, a gyro sensor, a position module, a vehicle drive/reverse sensor, a battery sensor, a fuel sensor, a tire sensor, a steering wheel rotation-based steering sensor, a vehicle-inside temperature sensor, a vehicle-inside humidity sensor, an ultrasonic sensor, a radar, a lidar, and the like.

Accordingly, the sensing unit 170 may obtain a sensing signal for vehicle direction information, vehicle position information (GPS information), vehicle angle information, vehicle speed information, vehicle acceleration information, vehicle inclination information, vehicle drive/reverse information, battery information, fuel information, tire information, vehicle lamp information, vehicle-inside temperature information, vehicle-inside humidity information, and the like.

The hall sensor 171 may be attached to the motor 132 to measure revolutions per minute (RPM) information about the motor 132. The hall sensor 171 may transmit the detected information to the control unit 180 through an electric signal.

The wheel sensor 172 may detect wheel information included in the wheels 101a, 101b, .... Here, the wheel information may include the number of times of rotation of the wheel, a rotation direction of the wheel, a rotation speed of the wheel, and an acceleration/deceleration state of the wheel. For example, the wheel sensor 172 may include a permanent magnet, a core, and a coil. The wheel sensor 172 may detect the number of times of rotation of the wheel, a rotation speed of the wheel, and an acceleration/deceleration state of the wheel based on a change in a transmission quantity of magnetic flux generated in the permanent magnet while the wheels provided with saw teeth rotate. The wheel sensor 172 may transmit the detected information to the control unit 180 through an electric signal.

The shift lever position detecting sensor 173 may detect a position among drive (D), neutral (N), reverse (R), and parking (P) at which a shift lever is positioned. The shift lever position detecting sensor 173 may transmit the detected information to the control unit 180 through an electric signal.

The speed sensor 174 may detect a speed of the electric vehicle 100. For example, the speed sensor 174 may include at least one of a reed switch-type vehicle speed sensor, a reluctance device-type circuit sensor, and a photoelectric vehicle speed sensor. The speed sensor 174 may transmit the detected information to the control unit 180 through an electric signal.

The APS 175 may detect a position of an acceleration pedal. The APS 175 may detect a degree of pressure, by which the driver steps on the accelerator pedal, and transmit the detected degree to the control unit 180 through an electric signal.

The BPS 176 may detect a position of a brake pedal. The BPS 176 may detect a degree, by which the driver steps on the brake pedal, and transmit the detected degree to the control unit 180 by an electric signal.

The inclination sensor 178 may detect an inclination angle of a vehicle body. When the electric vehicle 100 is positioned on a hill, the inclination sensor 178 may detect an inclination angle. For example, the inclination sensor 178 may include an acceleration sensor, and measure a change in acceleration of gravity according to an inclination degree, and measure an inclination angle. For example, the inclination sensor 178 may include a gyro sensor or a horizontal gauge sensor, and measure an inclination angle based on an output value according to an inclination degree.

The weight sensor 179 may detect weight of the electric vehicle 100. The weight sensor 179 may detect total weight including empty vehicle weight, passenger weight, and cargo weight. For example, the weight sensor 179 may include a piezo element, and detect weight or a change rate of weight of the electric vehicle 100 through a piezoelectric effect, and transmit the detected weight or change rate of weight to the control unit 180 through an electric signal.

The sensing unit 170 may include a voltage measuring sensor measuring a voltage of the battery 112. The sensing unit 170 may include a current measuring sensor measuring a current of the battery 112. The sensing unit 170 may include a temperature measuring sensor measuring a temperature of the battery 112.

The control unit 180 may control a general operation of each unit. The control unit 180 may be called a vehicle control unit (VCU). The control unit 180, which is a topmost layer control unit, may generally control an entire system of the electric vehicle 100.

The control unit 180 may determine whether the shift lever is positioned at drive (D) or reverse (R). When the shift lever is positioned at drive (D) or reverse (R), the control unit 180 may determine whether a travelling road is a hill.

The control unit 180 may compare a torque command value and a first output torque value according to the torque command value, and calculate a first comparison value. The control unit 180 may determine whether the travelling road is a hill based on the first comparison value. Here, the torque command value may be a value output by the control unit 180 or the motor control unit 134. As another example, the first output torque value may be an output torque value based on wheel information received by the wheel sensor 172 or RPM information detected by the hall sensor 171. As another example, the control unit 180 may determine whether the travelling road is a hill based on a signal output from the inclination sensor.

The control unit 180 may calculate an inclination angle of the hill. The control unit 180 may compare a torque command value and a first output torque value according to the torque command value, and calculate a first comparison value. The control unit 180 may calculate the inclination angle based on the first comparison value. As another example, the control unit 180 may determine an inclination angle of the hill based on a signal output by the inclination sensor 178.

When it is determined that the travelling road is the hill, the control unit 180 enters a first mode. Here, the first mode may be a mode for controlling a hill start assist of the vehicle body on the hill. For example, when the control unit 180 enters the first mode, the control unit 180 may perform a control for the hill start assist on the hill.

The control unit 180 may generate a reference torque in a state of entering the first mode. Here, the reference torque may be a torque for the hill start assist of the vehicle body. As another example, the reference torque may be a torque for making the vehicle body stop on the hill. The preset reference torque may be stored in the memory 190. The control unit 180 may correct the reference torque based on the total weight detected by the weight sensor 179. The control unit 180 may correct the reference torque based on an inclination angle of the hill.

The control unit 180 may output the reference torque to the motor 132 under the control of the motor control unit 134.

The control unit 180 may determine whether the vehicle body skids while outputting motor driving force according to the reference torque.

The control unit 180 may compare a reference torque and a second output torque value according to the reference torque, and calculate a second comparison value. The control unit 180 may determine whether the vehicle body skids based on the second comparison value. Here, the second output torque value may be an output torque value based on wheel information received by the wheel sensor 172 or RPM information detected by the hall sensor 171.

When it is determined that the vehicle body skids, the control unit 180 may increase the reference torque value so that driving force output by the motor 132 is increased.

When the vehicle body drives or reverses according to the driving force of the motor, the control unit 180 may decrease the reference torque value so that driving force output by the motor 132 is decreased.

The control unit 180 may reflect the increased or decreased torque value to the reference torque. The control unit 180 may reflect the torque value increased or decreased based on a variation amount of a vehicle speed to the reference torque. In this case, the control unit 180 may calculate the variation amount of the vehicle speed. The control unit 180 may calculate the variation amount of the vehicle speed based on the speed information detected by the vehicle speed sensor 174.

When the value of the reference torque is increased, the control unit 180 may calculate a torque amount increased according to the variation amount of the vehicle speed. When the value of the reference torque is decreased, the control unit 180 may calculate a torque amount increased according to the variation amount of the vehicle speed.

In some implementations, when an acceleration input is received through the acceleration input unit 143, the control unit 180 compares an acceleration torque according to the acceleration input and the reference torque. In this case, when the acceleration torque is equal to or larger than the reference torque, the control unit 180 may release the first mode.

According to some hardware implementations, the control unit 180 may be implemented by using at least one among application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units for performing other functions.

The memory 190 is electrically connected with the control unit 180. The memory 190 may store basic data for a unit, control data for controlling an operation of a unit, and input/output data. According to some hardware implementations, the memory 190 may be various storage devices, such as an ROM, a RAM, an EPROM, a flash drive, and a hard drive.

The memory 190 may store a comparison table generated based on experimental values deduced with respect to a relationship between the torque command value according to an inclination angle and the first output torque value. An inclination angle corresponding to the first comparison value obtained by comparing the torque command value and the first output value according to the torque command value may be matched in the comparison table and stored in the memory 190.

The interface unit 195 serves as a passage with various kinds of external device connected to the electric vehicle 100. For example, the interface unit 195 may include a port connectable with the mobile terminal 230, and be connected with the mobile terminal 230 through the port. In this case, the interface unit 195 may exchange data with the mobile terminal 230.

The vehicle driving unit 200 may include a lamp driving unit (not illustrated), a steering driving unit (not illustrated), a brake driving unit (not illustrated), a sunroof driving unit (not illustrated), a suspension driving unit (not illustrated), an air conditioner driving unit (not illustrated), a window driving unit (not illustrated), and an airbag driving unit (not illustrated).

The lamp driving unit (not illustrated) may control turn-on/turn-off of lamps disposed inside and outside the electric vehicle. Further, the lamp driving unit may control intensity, a direction, and the like of light of the lamp. For example, the lamp driving unit may control a turn signal lamp, a stop lamp, and the like.

The steering driving unit (not illustrated) may electronically control a steering apparatus within the electric vehicle 100. A movement direction of the electric vehicle 100 may be changed through the steering driving unit.

The brake driving unit (not illustrated) may electronically control a brake apparatus (not illustrated) within the electric vehicle 100. For example, the brake driving unit may decrease a speed of the electric vehicle 100 by controlling an operation of a brake disposed in the wheel. As another example, the brake driving unit may adjust a movement direction of the electric vehicle 100 to the left or the right by differentiating operations of the brakes disposed in a left wheel and a right wheel, respectively.

The sunroof driving unit (not illustrated) may electronically control a sunroof apparatus (not illustrated) within the electric vehicle 100. For example, the sunroof driving unit may control opening or closing of the sunroof.

The suspension driving unit (not illustrated) may electronically control a suspension apparatus (not illustrated) within the electric vehicle 100. For example, when a road surface has a curve, the suspension driving unit may control vibration of the electric vehicle 100 to be decreased by controlling the suspension apparatus.

The air conditioner driving unit (not illustrated) may electronically control an air conditioner (not illustrated) within the electric vehicle 100. For example, when a temperature inside the electric vehicle is high, the air conditioner driving unit may control so that the air conditioner is operated, and thus cold air is supplied into the electric vehicle.

The window driving unit (not illustrated) may electronically control a window apparatus within the electric vehicle 100. For example, the window driving unit may control opening or closing of left and right windows on lateral surfaces of the electric vehicle.

The airbag driving unit (not illustrated) may electronically control an airbag apparatus within the electric vehicle 100. For example, the airbag driving unit may control the airbag apparatus to release when a dangerous situation occurs.

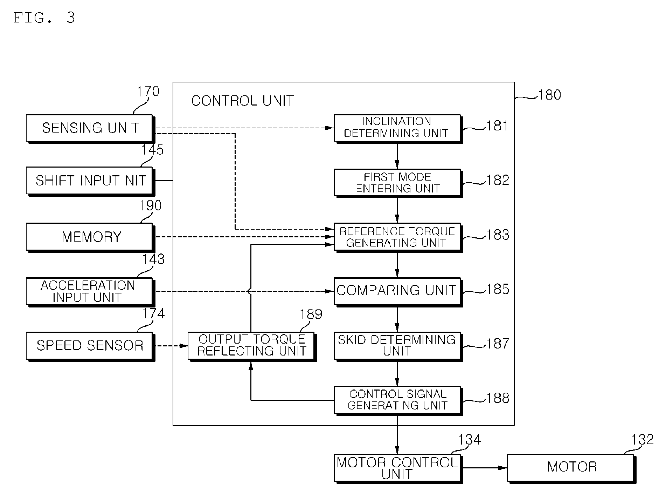

FIG. 3 is a block diagram of an example of a control unit of an electric vehicle.

Referring to FIG. 3, the control unit 180 may include an inclination determining unit 181, a first mode entering unit 182, a reference torque generating unit 183, a comparing unit 185, a skid determining unit 187, a control signal generating unit 188, and an output torque reflecting unit 189.

The control unit 180 may receive information on a position of the shift lever from the shift lever position detecting sensor 173.

When the shift lever is positioned at drive (D) or reverse (R), the inclination determining unit 181 may determine whether a travelling road is a hill.

The inclination determining unit 181 may calculate a first comparison value by comparing a torque command value and a first output torque value output according to the torque command value, and determine whether the travelling road is a hill based on the first comparison value. Here, the torque command value may be a value output by the control unit 180 or the motor control unit 134. The first output torque value may be calculated based on wheel information detected by the wheel sensor 172. As another example, the first output torque value may be calculated based on RPM information about the motor 132 detected by the hall sensor 171. For example, when the electric vehicle 100 reverses even though the electric vehicle 100 needs to drive by the driving force generated by the motor 132, the control unit 180 may determine that the travelling road is a hill. When a torque command value output in a state where the shift lever is positioned at drive (D) is a positive torque, but the first output torque value is a reverse torque, the inclination determining unit 181 may determine that the travelling road is an uphill. For example, when the electric vehicle 100 drives even though the electric vehicle 100 needs to reverse by the driving force generated by the motor 132, the control unit 180 may determine that the travelling road is a hill. When a torque command value output in a state where the shift lever is positioned at reverse (R) is a reverse torque, but the first output torque value is a positive torque, the inclination determining unit 181 may determine that the travelling road is a downhill.

In some implementations, the inclination determining unit 181 may also determine whether the travelling road is a hill based on a signal output by the inclination sensor 178. For example, the inclination determining unit 181 may also determine whether the travelling road is a hill based on data received by the inclination sensor 178.

When it is determined that the travelling road is the hill, the first mode entering unit 182 may control the electric vehicle 100 to enter a first mode. Here, the first mode may be a mode for controlling a hill start assist of the vehicle body on the hill. For example, when the electric vehicle 100 enters the first mode, the first mode entering unit 182 may perform a control for the hill start assist of the vehicle body on the hill.

In a state of entering the first mode, the reference torque generating unit 183 may generate a reference torque. Here, the reference torque may be a torque for the hill start assist of the vehicle body. As another example, the reference torque may be a torque for making the vehicle body stop on the hill. For example, the reference torque may be a value calculated by an experiment. When the electric vehicle 100 is positioned on the hill in a state where a driver gets in the electric vehicle 100, a torque value, which needs to be output for the hill start assist, may be defined as the reference torque. The preset reference torque may be stored in the memory 190.

The reference torque may be corrected based on an inclination angle of a hill. For example, the reference torque generating unit 183 may calculate an inclination angle of a hill as described above. The reference torque generating unit 183 may correct the reference torque so that the inclination angle is reflected. Skid force on the hill is in proportion to a sine value ($\sin \theta$) of an inclination angle ($\theta$). The reference torque generating unit 183 may correct the reference torque in response to a sine value of the inclination angle. For example, the reference torque generating unit 183 may correct the reference torque to be increased as the inclination angle becomes large. For example, the reference torque generating unit 183 may correct the reference torque to be decreased as an inclination angle becomes small.

In some implementations, the reference torque may be corrected based on total weight of the electric vehicle 100. For example, the weight sensor 179 may detect total weight including empty vehicle weight, passenger weight, and cargo weight. The reference torque generating unit 183 may receive total weight data detected by the weight sensor 179, and correct the reference torque based on the total weight. Skid force on the hill is in proportion to the total weight. The reference torque generating unit 183 may correct the reference torque in response to total weight. For example, the reference torque generating unit 183 may correct the reference torque to be increased as total weight becomes large. For example, the reference torque generating unit 183 may correct the reference torque to be decreased as total weight becomes small.

In a state where the reference torque is generated, the comparing unit 185 may determine whether an acceleration input is received through the acceleration input unit 143.

When the acceleration input is received, the comparing unit 185 may determine whether an acceleration torque according to the acceleration input is equal to or larger than the reference torque.

When the acceleration torque is equal to or larger than the reference torque, the comparing unit 185 may release the first mode. In this case, the comparing unit 185 may move the electric vehicle 100 according to the acceleration torque. When the reference torque is generated and output on the hill, the electric vehicle 100 may stop on the hill. When a larger acceleration torque than the reference torque is input according to the acceleration input, the electric vehicle 100 may drive or reverse based on the acceleration torque. As such, the electric vehicle 100 may move based on the acceleration torque.

When the acceleration input is not received, or the acceleration torque determined by the comparing unit 185 is smaller than the reference torque, the skid determining unit 187 may determine whether the vehicle body stops. That is, the skid determining unit 187 may determine whether the electric vehicle 100 stops on the hill. The skid determining unit 187 may determine whether the vehicle body stops based on the wheel information detected by the wheel sensor 172 or the RPM information about the motor detected by the hall sensor 171.

When the vehicle body stops on the hill, the control signal generating unit 188 may output a control signal, so that an output is maintained with the reference torque generated by the reference torque generating unit 183. In this case, the control signal generating unit 188 may make the vehicle body stop on the hill without movement by maintaining (e.g., in a continuous manner) the output of the reference torque. That is, the control signal generating unit 188 may make the electric vehicle 100 stop on the hill.

When the vehicle body does not stop on the hill, the skid determining unit 187 may determine whether the vehicle body skids due to the hill.

The skid determining unit 187 may calculate a second comparison value by comparing the reference torque and a second output torque value output according to the reference torque, and determine whether the vehicle body skids based on the second comparison value. Here, the reference torque may be a torque value generated by the reference torque generating unit 183. The second output torque value may be calculated based on wheel information detected by the wheel sensor 172. As another example, the second output torque value may be calculated based on RPM information about the motor 132 detected by the hall sensor 171.

When the skid determining unit 187 determines that the vehicle body skids, the control signal generating unit 188 may output a control signal for increasing a reference torque value so that driving force output by the motor 132 is increased.

When the skid determining unit 187 determines that the vehicle body does not skid, that is, the vehicle body drives or reverses by the driving force of the motor 132, the control signal generating unit 188 may output control signal for decreasing a reference torque value so that driving force output by the motor 132 is decreased.

The output torque reflecting unit 189 may reflect the increased or decreased torque value to the reference torque.

In this case, the output torque reflecting unit 189 may calculate a variation amount of a vehicle speed. The output torque reflecting unit 189 may calculate the variation amount of the vehicle speed based on the speed information detected by the vehicle speed sensor 174.

When the control signal for increasing the torque value is output, the output torque reflecting unit 189 may calculate a torque amount increased according to the variation amount of the vehicle speed. For example, when the variation amount of the vehicle speed is large, the output torque reflecting unit 189 may determine a torque value increased in proportion to the variation amount of the vehicle speed to be large. By contrast, when the variation amount of the vehicle speed is small, the output torque reflecting unit 189 may determine a torque value increased in proportion to the variation amount of the vehicle speed to be small.

When the control signal for decreasing the torque value is output, the output torque reflecting unit 189 may calculate a torque amount increased according to the variation amount of the vehicle speed. As an example, when the variation amount of the vehicle speed is large, the output torque reflecting unit 189 may determine a torque amount decreased in proportion to the variation amount of the vehicle speed to be large. By contrast, when the variation amount of the vehicle speed is small, the output torque reflecting unit 189 may determine a torque value decreased in proportion to the variation amount of the vehicle speed to be small.

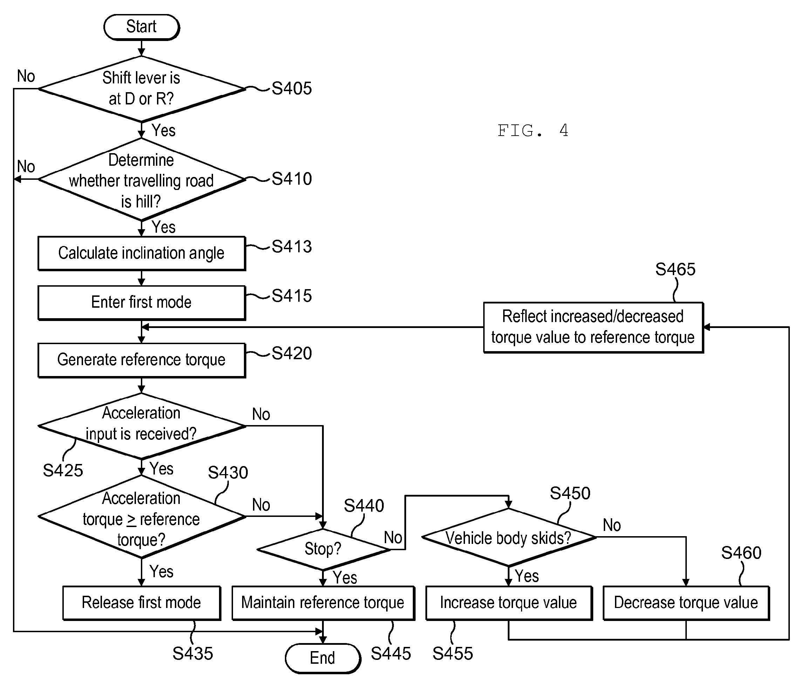

FIG. 4 is a flowchart of an example of controlling an electric vehicle.

Referring to FIG. 4, the control unit 180 may determine whether the shift lever is positioned at drive (D) or reverse (R) (S405). The control unit 180 may receive information on a position of the shift lever from the shift lever position detecting sensor 173. The control unit 180 may determine whether the shift lever is positioned at drive (D) or reverse (R) based on the information on the position of the shift lever.

When the shift lever is positioned at drive (D) or reverse (R), the control unit 180 may determine whether a travelling road is a hill (S410).

The control unit 180 may calculate a first comparison value by comparing a torque command value and a first output torque value output according to the torque command value, and determine whether the travelling road is a hill based on the first comparison value. Here, the torque command value may be a value output by the control unit 180 or the motor control unit 134. The first output torque value may be calculated based on wheel information detected by the wheel sensor 172. As another example, the first output torque value may be calculated based on RPM information about the motor 132 detected by the hall sensor 171. For example, when the torque command value output in a state where the shift lever is positioned at drive (D) is a positive torque, but the first output torque value is a reverse torque, the control unit 180 may determine that the travelling road is an uphill. For example, when the torque command value output in a state where the shift lever is positioned at reverse (R) is a reverse torque, but the first output torque value is a positive torque, the control unit 180 may determine that the travelling road is a downhill.

The control unit 180 may determine whether the travelling road is a hill based on a signal output by the inclination sensor 178. For example, the control unit 180 may also determine whether the travelling road is a hill based on data received by the inclination sensor 178.

After the determination of the hill, the control unit 180 may calculate an inclination angle of the hill. Here, the inclination angle may be calculated based on the first comparison value obtained by comparing the torque command value and the first output value according to the torque command value. Here, the torque command value may be a value output by the control unit 180 or the motor control unit 134. The first output torque value may be calculated based on wheel information detected by the wheel sensor 172. As another example, the first output torque value may be calculated based on RPM information about the motor 132 detected by the hall sensor 171. For example, an experimental value for a relationship between the torque command value according to the inclination angle and the first output torque value may be deduced by a plurality of experiments. The experimental value may be stored in the memory 190 in a form of a comparison table. The control unit 180 may calculate the inclination angle corresponding to the first comparison value obtained by comparing the torque command value and the first output value according to the torque command value based on the comparison table.

The control unit 180 may determine the inclination angle of the hill based on a signal output by the inclination sensor 178. For example, the control unit 180 may also determine whether the travelling road is a hill based on data received by the inclination sensor 178.

When it is determined that the travelling road is the hill, the control unit 180 may enter a first mode (S415). Here, the first mode may be a mode for controlling a hill start assist of the vehicle body on the hill. As an example, when the control unit 180 enters the first mode, the control unit 180 may perform a control for the hill start assist of the vehicle body on the hill.

The control unit 180 may generate a reference torque in a state of entering the first mode. Here, the reference torque may be a torque for the hill start assist of the vehicle body. As another example, the reference torque may be a torque for making the vehicle body stop on the hill. For example, the reference torque may be a value calculated by an experiment. When the electric vehicle 100 is positioned on the hill in a state where a driver gets in the electric vehicle 100, a torque value, which needs to be output for the hill start assist, may be defined as the reference torque. The preset reference torque may be stored in the memory 190.

The reference torque may be corrected based on the inclination angle of the hill. For example, the control unit 180 may calculate the inclination angle of the hill as described above. The control unit 180 may correct the reference torque so that the inclination angle is reflected. Skid force on the hill is in proportion to a sine value ($\sin \theta$) of an inclination angle ($\theta$). The control unit 180 may correct the reference torque in response to the sine value of the inclination angle. For example, the control unit 180 may correct the reference torque to be increased as an inclination angle is large. For example, the control unit 180 may correct the reference torque to be decreased as an inclination angle is small. The reference torque may be corrected based on total weight of the electric vehicle 100. Particularly, the weight sensor 179 may detect total weight including empty vehicle weight, passenger weight, and cargo weight. The control unit 180 may receive total weight data detected by the weight sensor 179, and correct the reference torque based on the total weight. Skid force on the hill is in proportion to the total weight. The control unit 180 may correct the reference torque in response to the total weight. For example, the control unit 180 may correct the reference torque to be increased as the total weight is large. For example, the control unit 180 may correct the reference torque to be decreased as the total weight is small.

In a state where the reference torque is generated, the control unit 180 may determine whether an acceleration input is received through the acceleration input unit 143 (S425).

When the acceleration input is received, the control unit 180 may determine whether an acceleration torque according to the acceleration input is equal to or larger than the reference torque (S430).

When the acceleration torque is equal to or larger than the reference torque, the control unit 180 may release the first mode (S435). In this case, the control unit 180 may move the electric vehicle 100 according to the acceleration torque. When the reference torque is generated and output on the hill, the electric vehicle 100 may stop on the hill. When a larger acceleration torque than the reference torque is input according to the acceleration input, the electric vehicle 100 may drive or reverse based on the acceleration torque. That is, the electric vehicle 100 may move based on the acceleration torque.

When the acceleration input is not received in operation S425, or the acceleration torque is smaller than the reference torque in operation S430, the control unit 180 may determine that the vehicle body stops (S440). For example, the control unit 180 may determine whether the electric vehicle 100 stops on the hill. The control unit 180 may determine whether the vehicle body stops based on the wheel information detected by the wheel sensor 172 or the RPM information about the motor detected by the hall sensor 171.

When the vehicle body stops on the hill, the control unit 180 may maintain an output of the reference torque generated in operation S420 (S445). In this case, the control unit 180 may make the vehicle body stop on the hill without movement by maintaining (e.g., in a continuous manner) the output of the reference torque. For example, the control unit 180 may make the electric vehicle 100 stop on the hill.

When the vehicle body does not stop on the hill, the control unit 180 may determine whether the vehicle body skids by the hill (S450).

The control unit 180 may calculate a second comparison value by comparing the reference torque and a second output torque value output according to the reference torque, and determine whether the vehicle body skids based on the second comparison value. Here, the reference torque may be the torque value generated in operation S420. The second output torque value may be calculated based on wheel information detected by the wheel sensor 172. As another example, the second output torque value may be calculated based on RPM information about the motor 132 detected by the hall sensor 171.

When it is determined that the vehicle body skids, the control unit 180 may increase the reference torque value so that driving force output by the motor 132 is increased (S455).

When it is determined that the vehicle body does not skid, the control unit 180 may decrease the reference torque value so that driving force output by the motor 132 is decreased (S460). Here, when the vehicle body does not skid, the vehicle body may drive or reverse according to the driving force of the motor 132.

The control unit 180 may reflect the torque value increased or decreased through operation S455 or S460 to the reference torque (S465). The control unit 180 may reflect the torque value increased or decreased based on a variation amount of a vehicle speed to the reference torque.

In this case, the control unit 180 may calculate the variation amount of the vehicle speed. The control unit 180 may calculate the variation amount of the vehicle speed based on the speed information detected by the vehicle speed sensor 174.

When the torque value is increased (S455), the control unit 180 may calculate a torque amount increased according to the variation amount of the vehicle speed. As an example, when the variation amount of the vehicle speed is large, the control unit 180 may determine a torque value increased in proportion to the variation amount of the vehicle speed to be large. When the variation amount of the vehicle speed is small, the control unit 180 may determine a torque value increased in proportion to the variation amount of the vehicle speed to be small.

When the torque value is decreased (S460), the control unit 180 may calculate a torque amount decreased according to the variation amount of the vehicle speed. For example, when the variation amount of the vehicle speed is large, the control unit 180 may determine a torque amount decreased in proportion to the variation amount of the vehicle speed to be large. By contrast, when the variation amount of the vehicle speed is small, the control unit 180 may determine a torque value decreased in proportion to the variation amount of the vehicle speed to be small.

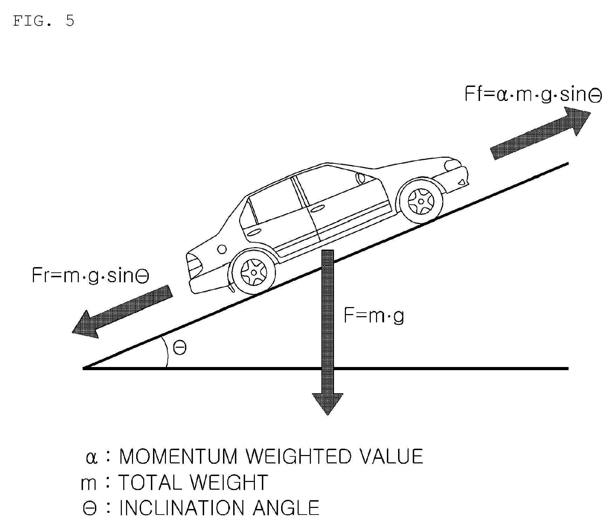

FIG. 5 is a diagram illustrating an example of an electric vehicle located on an incline.

Referring to FIG. 5, when the electric vehicle 100 is positioned on a hill, skid force Fr is applied to the electric vehicle 100 by gravity. Here, the skid force Fr may be calculated by Equation 1 below. Further, force Ef applied in an opposite direction to that of the skid force Fr for stopping the electric vehicle 100 may be calculated by Equation 2 below.

$$Fr = m \cdot g \cdot \sin\theta \qquad\qquad \text{[Equation 1]}$$

$$Ff = \alpha \cdot m \cdot g \cdot \sin\theta \qquad\qquad \text{[Equation 2]}$$

Here, $\alpha$ is a preset momentum weighted value, m is total weight, g is acceleration of gravity, and $\theta$ is an inclination angle.

The skid force Fr and the force Ef for stopping the electric vehicle 100 are in proportion to the total weight m and sine $\theta$ of the electric vehicle 100. As described above, the reference torque generating unit 183 included in the control unit 180 may correct the reference torque by reflecting the total weight m of the electric vehicle 100. The reference torque generating unit 183 included in the control unit 180 may correct the reference torque by reflecting the inclination angle $\theta$.

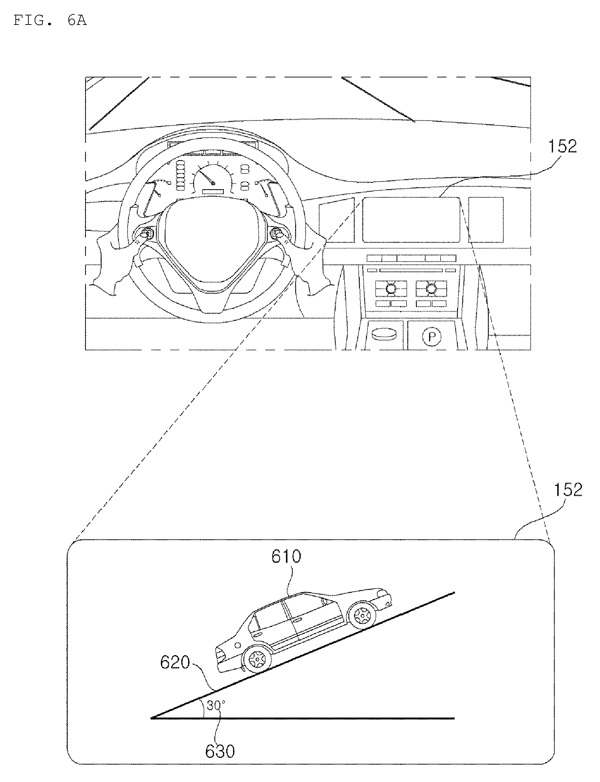

FIGS. 6A to 6D are diagrams illustrating examples of information displayed on a display unit (such as display unit 152) of an electric vehicle.

As illustrated in the example of FIG. 6A, when the electric vehicle 100 is located on a hill, the control unit 180 may display an image of the electric vehicle 100 located on the hill through the display unit 152. For example, the control unit 180 may determine that a travelling road is a hill and generate a reference torque for stopping on the hill to control the motor132, thereby controlling the electric vehicle 100 to stop on the hill. In this case, the control unit 180 may graphically process an image 620 of the hill, an inclination 630 of the hill, and an image 610 of the electric vehicle 100 located on the hill and display the graphically processed images on the display unit 152.

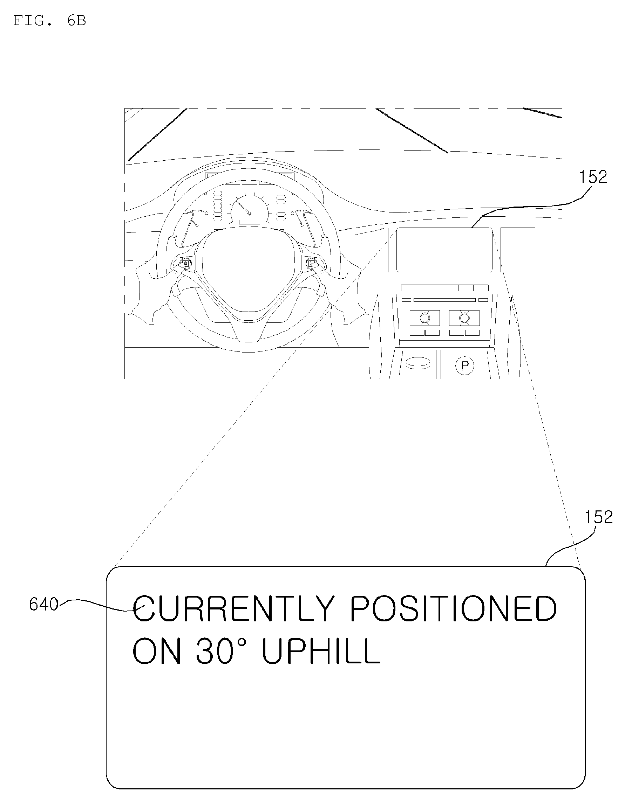

As illustrated in the example of FIG. 6B, when the electric vehicle 100 is located on the hill, the control unit 180 may display information notifying that the electric vehicle 100 is located on the hill through the display unit 152 in a form of a text message 640. For example, the control unit 180 may determine that a travelling road is a hill and generate a reference torque for stopping on the hill to control the motor 132, thereby controlling the electric vehicle 100 to stop on the hill. In this case, the control unit 180 may output the text message 640 notifying that the electric vehicle 100 stops on the hill.

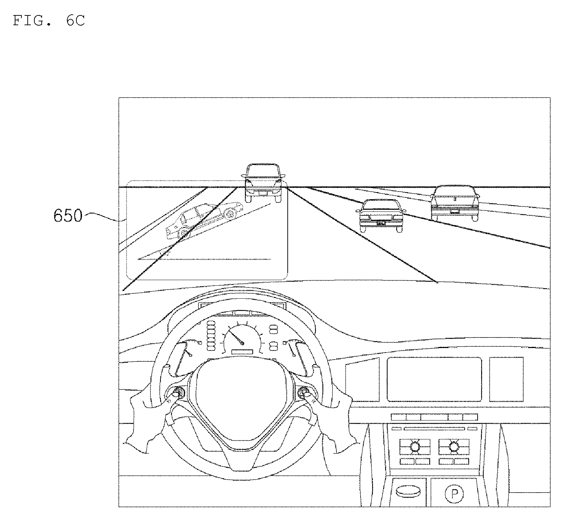

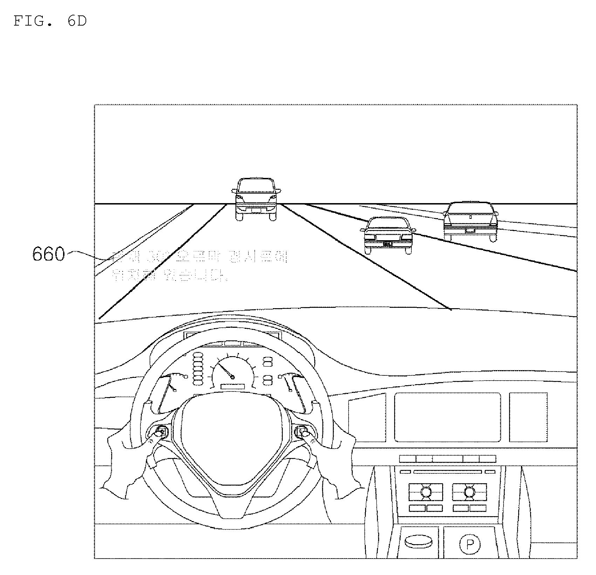

When the display unit 152 is formed of the HUD, as illustrated in FIGS. 6C and 6D, the control unit 180 may display an image of the electric vehicle 100 located on the hill on the hill on a predetermined regions 650 or 660 of the wind shield or information notifying that the electric vehicle 100 is located in a form of a text message.

As described with reference to the example in FIGS. 6A to 6D, information about the electric vehicle 100 stopping on the hill is displayed, so that a user may intuitively confirm a degree of inclination, at which the electric vehicle 100 stops.

The methods, techniques, systems, and apparatuses described herein may be implemented in digital electronic circuitry or computer hardware, for example, by executing instructions stored in tangible computer-readable storage media.

Apparatuses implementing these techniques may include appropriate input and output devices, a computer processor, and/or tangible computer-readable storage media storing instructions for execution by a processor.

A process implementing techniques disclosed herein may be performed by a processor executing instructions stored on a tangible computer-readable storage medium for performing desired functions by operating on input data and generating appropriate output. Suitable processors include, by way of example, both general and special purpose microprocessors. Suitable computer-readable storage devices for storing executable instructions include all forms of non-volatile memory, including, by way of example, semiconductor memory devices, such as Erasable Programmable Read-Only Memory (EPROM), Electrically Erasable Programmable Read-Only Memory (EEPROM), and flash memory devices; magnetic disks such as fixed, floppy, and removable disks; other magnetic media including tape; and optical media such as Compact Discs (CDs) or Digital Video Disks (DVDs). Any of the foregoing may be supplemented by, or incorporated in, specially designed application-specific integrated circuits (ASICs).

Although the operations of the disclosed techniques may be described herein as being performed in a certain order and/or in certain combinations, in some implementations, individual operations may be rearranged in a different order, combined with other operations described herein, and/or eliminated, and desired results still may be achieved. Similarly, components in the disclosed systems may be combined in a different manner and/or replaced or supplemented by other components and desired results still may be achieved.

**Claims**

1. An electric vehicle(100), comprising:

    a motor(132); and
    a control unit(180) configured to:

        determine whether the electric vehicle is travelling on an incline;
        initiate, based on a determination that the electric vehicle is travelling on an incline, an incline assist operation of the electric vehicle;
        generate a reference torque for the incline assist operation of the electric vehicle;
        output, to the motor and based on initiating the incline assist operations, the generated reference torque;
        control the motor to output a driving force according to the reference torque; and
        determine, based on controlling the motor to output the driving force according to the reference torque, whether the electric vehicle skids on the incline.

2. The electric vehicle(100) of claim 1, wherein the control unit(180) is further configured to:

    determine that the electric vehicle skids on the incline; and
    increase, based on a determination that the electric vehicle skids on the incline, a value of the reference torque so that the driving force output by the motor is increased.

3. The electric vehicle(100) of claim 1 or 2, wherein the control unit(180) is further configured to:

    determine that the electric vehicle drives or reverses on the incline according to the driving force output by the motor; and
    decrease, based on a determination that the electric vehicle drives or reverses according to the driving force output by the motor, a value of the reference torque so that the driving force output by the motor is decreased.

4. The electric vehicle(100) of claim 2 or 3, further comprising:

    a speed sensor(174) configured to detect a speed of the electric vehicle,

    wherein the control unit(180) is further configured to:

        determine an amount of variation of the speed of the electric vehicle based on the speed of the electric vehicle detected by the speed sensor; and
        determine an increased torque amount according to the determined amount of variation of the speed of the electric vehicle,

wherein the control unit is configured to increase the value of the reference torque based on the determined increased torque amount.

5. The electric vehicle(100) of claim 3 or 4, further comprising:

a speed sensor(174) configured to detect a speed of the electric vehicle,

wherein the control unit(180) is further configured to:

determine an amount of variation of the speed of the vehicle based on the speed of the electric vehicle detected by the speed sensor; and
determine a decreased torque amount according to the determined amount of variation of the speed of the electric vehicle,

wherein the control unit is configured to decrease the value of the reference torque based on the determined decrease torque amount.

6. The electric vehicle(100) of any one of claims 1 to 5, further comprising:

acceleration input means configured to receive an acceleration input,

wherein the control unit is further configured to:

determine an acceleration torque according to the received acceleration input;
compare the determined acceleration torque with the reference torque;
determine that the acceleration torque is equal to or larger than the reference torque; and
release the incline assist operation based on a determination that the acceleration torque is equal to or larger than the reference torque.

7. The electric vehicle(100) of any one of claims 1 to 6, wherein the control unit(180) is further configured to:

determine a torque command value;
determine a first output torque value;
compare the torque command value with the first output torque value;
determine a first comparison value based on comparing the torque command value with the first output torque value; and
determine whether the electric vehicle is travelling on an incline based on the first comparison value.

8. The electric vehicle(100) of any one of claims 1 to 7, wherein the control unit(180) is further configured to:

determine a second output torque value;
compare the reference torque with the second output torque value;
determine a second comparison value based on comparing the reference torque with the second output torque value; and
determine whether the electric vehicle skids on the incline based on the second comparison value.

9. The electric vehicle(100) of claim 7, further comprising:

a wheel sensor(172) configured to detect wheel information; and
a hall sensor(171) configured to detect revolutions per minute (RPM) information of the motor,

wherein the control unit(180) is configured to determine the first output torque value based on the wheel information or the RPM information.

10. The electric vehicle(100) of claim 8 or 9, further comprising:

a wheel sensor(172) configured to detect wheel information; and
a hall sensor(172) configured to detect revolutions per minute (RPM) information of the motor,

wherein the control unit(180) is configured to determine the second output torque value based on the wheel information or the RPM information.

11. The electric vehicle(100) of any one of claims 1 to 10, further comprising:

an inclination sensor(178) configured to detect an inclination angle of the electric vehicle,

wherein the control unit(180) is configured to determine whether the electric vehicle is travelling on an incline based on a signal output by the inclination sensor.

12. The electric vehicle(100) of any one of claims 1 to 11, further comprising:

a weight sensor(179) configured to detect a total weight comprising a vehicle weight, a passenger weight, and a cargo weight,

wherein the control unit(180) is further configured to adjust the reference torque based on the detected total weight.

13. The electric vehicle(100) of any one of claims 1 to 12, wherein the control unit(180) is further configured to:

determine an inclination angle of the electric vehicle; and
adjust the reference torque based on the inclination angle.

14. The electric vehicle(100) of claim 13, wherein the control unit(180) is further configured to:

determine a torque command value;
determine a first output torque value;
compare the torque command value with the first output torque value;
determine a first comparison value based on comparing the torque command value with the first output torque value; and
determine the inclination angle of the electric vehicle based on the first comparison value.

15. The electric vehicle(100) of any one of claims 1 to 14, further comprising:

shift input means; and
a shift input mode detecting unit configured to detect a mode of the shift input means,

wherein the control unit(180) is configured to determine whether the electric vehicle is travelling on an incline based on detecting that the mode of the shift input means is a drive shift mode or a reverse shift mode.

FIG. 1

100

FIG. 2

FIG. 3

CONTROL UNIT ~180

SENSING UNIT — 170

SHIFT INPUT NIT — 145

MEMORY — 190

ACCELERATION INPUT UNIT — 143

SPEED SENSOR — 174

INCLINATION DETERMINING UNIT — 181

FIRST MODE ENTERING UNIT — 182

REFERENCE TORQUE GENERATING UNIT — 183

COMPARING UNIT — 185

OUTPUT TORQUE REFLECTING UNIT — 189

SKID DETERMINING UNIT — 187

CONTROL SIGNAL GENERATING UNIT — 188

MOTOR CONTROL UNIT — 134

MOTOR — 132

FIG. 4

EP 3 048 000 A2

FIG. 5

$Ff=\alpha \cdot m \cdot g \cdot \sin \Theta$

$Fr=m \cdot g \cdot \sin \Theta$

$F=m \cdot g$

$\Theta$

$\alpha$ : MOMENTUM WEIGHTED VALUE
m : TOTAL WEIGHT
$\Theta$ : INCLINATION ANGLE

FIG. 6A

FIG. 6B

152

152

640

CURRENTLY POSITIONED ON 30° UPHILL

FIG. 6C

650

FIG. 6D

660

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150010414